# EUROPEAN PATENT APPLICATION

(11) **EP 4 819 218 A1**
(43) Date of publication of application: **07.10.2026**
(21) Application number: 26165290.3
(22) Date of filing: 17.03.2026
(51) Int. Cl.: H01M 4/131, H01M 4/36, H01M 4/62, H01M 4/525, H01M 4/1391, H01M 10/04, H01M 10/42, H01M 10/0525, H01M 10/0587

(54) **POSITIVE ELECTRODE AND NON-AQUEOUS ELECTROLYTE SECONDARY BATTERY HAVING THE SAME**

(30) Priority: 02.04.2025 JP 2025061041
(71) Applicant: Prime Planet Energy & Solutions, Inc., Chuo-ku, Tokyo 103-0022 (JP)
(72) Inventor: YOSHIDA, Hikaru, Tokyo 103-0022 (JP)
(74) Representative: Kuhnen & Wacker Patent- und Rechtsanwaltsbüro PartG mbB

(57) **Abstract**

Provided is a positive electrode capable of preventing gas generation during storage of a non-aqueous electrolyte secondary battery having a lithium composite oxide with a high nickel content ratio. The positive electrode according to the present disclosure includes a positive electrode current collector and a positive electrode active material layer supported by the positive electrode current collector. The positive electrode active material layer includes first positive electrode active material particles in a form of secondary particles. The first positive electrode active material particles include particles of a lithium composite oxide; and a B-containing component, LiOH, and Li₂CO₃ that are present on surfaces of the particles of the lithium composite oxide. The lithium composite oxide contains 75 mol% or more of Ni relative to metals therein other than Li. The total amount of LiOH and Li₂CO₃ in the first positive electrode active material particles is 0.5 mass% to 1.0 mass%, and the ratio of the total amount of LiOH and Li₂CO₃ to the amount of B is 3.5 to 10.

## Description

### BACKGROUND OF THE DISCLOSURE

### 1. Field

The present disclosure relates to a positive electrode. The present disclosure also relates to a non-aqueous electrolyte secondary battery having the positive electrode.

### 2. Background

In recent years, non-aqueous electrolyte secondary batteries such as lithium-ion batteries have been favorably used as portable power sources for devices such as personal computers and mobile terminals; and vehicle drive power sources in electric vehicles (BEVs), hybrid vehicles (HEVs), plug-in hybrid vehicles (PHEVs), and the like.

In a positive electrode of a lithium-ion secondary battery, a positive electrode active material such as a lithium composite oxide is typically used. Such a lithium composite oxide has lithium components such as lithium hydroxide (LiOH) and lithium carbonate (Li₂CO₃) adhering to a surface thereof as residues, byproducts, and the like. These lithium components are known to react with a non-aqueous electrolyte (see, for example, Patent Literature 1). The reaction between the lithium components and the non-aqueous electrolyte may result in gas generation and decreased capacity of a lithium-ion secondary battery. Accordingly, Patent Literature 2 proposes a process of thermally treating a lithium composite oxide with elemental boron or a boron compound to reduce the contents of LiOH and Li₂CO₃, in order to prevent a reaction between lithium components and a non-aqueous electrolyte.

### Citation List

### Patent Literature

Patent Literature 1: Japanese Patent Publication No. 7483987
Patent Literature 2: WO2024/095978

### SUMMARY

As described in Patent Literature 2, a higher content ratio of nickel in a lithium composite oxide may further facilitate gas generation due to a reaction with a non-aqueous electrolyte. After extensive studies, the present inventor has found that there is room for improvement in preventing gas generation during storage of a non-aqueous electrolyte secondary battery having a lithium composite oxide with a high nickel content ratio.

Accordingly, an object of the present disclosure is to provide a positive electrode capable of preventing gas generation during storage of a non-aqueous electrolyte secondary battery having a lithium composite oxide with a high nickel content ratio.

The positive electrode according to the present disclosure includes a positive electrode current collector and a positive electrode active material layer supported by the positive electrode current collector. The positive electrode active material layer includes first positive electrode active material particles in a form of secondary particles. The first positive electrode active material particles include particles of a lithium composite oxide; and a B-containing component, LiOH, and Li₂CO₃ that are present on the surfaces of the particles of the lithium composite oxide. The lithium composite oxide contains 75 mol% or more of Ni relative to metals therein other than Li. The total amount of LiOH and Li₂CO₃ in the first positive electrode active material particles is 0.5 mass% to 1.0 mass%, and the ratio of the total amount of LiOH and Li₂CO₃ to the amount of B is 3.5 to 10.

According to this configuration, a positive electrode capable of preventing gas generation during storage of a non-aqueous electrolyte secondary battery having a lithium composite oxide with a high nickel content ratio can be provided.

In view of another perspective, the non-aqueous electrolyte secondary battery according to the present disclosure includes the aforementioned positive electrode, a negative electrode, and a non-aqueous electrolyte. According to this configuration, a non-aqueous electrolyte secondary battery capable of preventing gas generation during storage can be provided although a lithium composite oxide with a high nickel content ratio is used.

### BRIEF DESCRIPTION OF THE DRAWINGS

FIG. 1 shows a schematic cross-sectional view of a positive electrode according to one embodiment of the present disclosure;
FIG. 2 shows a schematic view of a secondary particle;
FIG. 3 shows a schematic view of single particles;
FIG. 4 shows a schematic cross-sectional view of the internal structure of a lithium-ion secondary battery according to one embodiment of the present disclosure; and
FIG. 5 shows a schematic exploded view of the configuration of a wound electrode body of a lithium-ion secondary battery according to one embodiment of the present disclosure.

### DETAILED DESCRIPTION OF THE EMBODIMENTS

Hereinafter, embodiments according to the present disclosure will be described with reference to the drawings. It should be noted that matters not mentioned in the present specification but necessary for carrying out the present disclosure can be grasped as design matters of a person skilled in the art based on the prior art in the relevant field. The present disclosure can be carried out based on the content disclosed in the present specification and technical common knowledge in the relevant field. In the following drawings, the same reference numerals are assigned to members and portions having the same functions for explanation. Further, dimensional relationships (length, width, thickness, etc.) in each drawing do not reflect actual dimensional relationships. It should be noted that in the present specification, a numerical range expressed as "A to B" includes A and B.

It should be noted that the term "secondary battery" herein refers to a power storage device capable of being repeatedly charged and discharged. The term "lithium ion secondary battery" herein refers to a secondary battery that uses lithium ions as charge carriers and performs charge and discharge by movement of charges accompanying lithium ions between positive and negative electrodes.

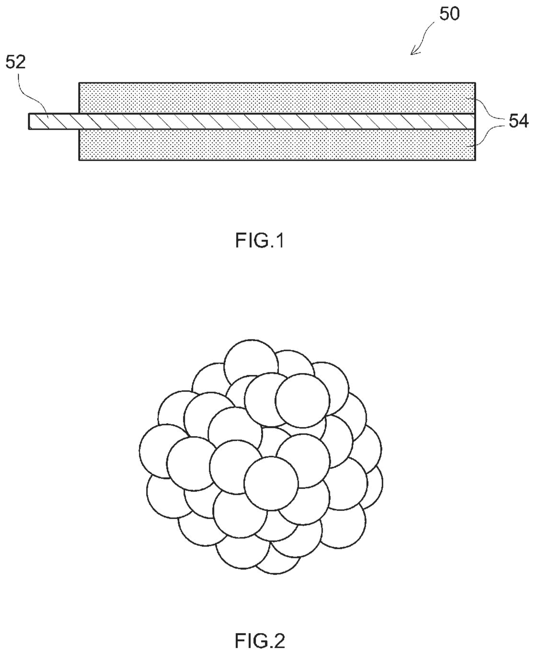

Hereinafter, the positive electrode according to the present disclosure will be described in detail with reference to those embodiments as examples in which it is used as a positive electrode of a lithium-ion secondary battery. However, the present disclosure is not intended to be limited to those embodiments. FIG. 1 shows a schematic cross-sectional view of a positive electrode according to this embodiment, taken along the thickness direction and the width direction.

As illustrated, a positive electrode 50 includes a positive electrode current collector 52 and a positive electrode active material layer 54 supported by the positive electrode current collector 52. The positive electrode active material layer 54 is provided on both surfaces of the positive electrode current collector 52 in the illustrated example. However, the positive electrode active material layer 54 may be provided on one surface of the positive electrode current collector 52. The positive electrode active material layer 54 is desirably provided on both surfaces of the positive electrode current collector 52.

The positive electrode current collector 52 may be a known positive electrode current collector used in lithium-ion secondary batteries, examples of which include sheets or foils made of metals with good electrical conductivity (e.g., aluminum, nickel, titanium, stainless steel, and the like). An aluminum foil is desired as the positive electrode current collector 52.

There is no particular limitation for the dimensions of the positive electrode current collector 52, and they may be appropriately selected according to the battery designs. When an aluminum foil is used as the positive electrode current collector 52, the thickness thereof is, for example, but not particularly limited to, 5 µm or more and 35 µm or less, and desirably 7 µm or more and 20 µm or less.

The positive electrode active material layer 54 contains a positive electrode active material. In this embodiment, at least first positive electrode active material particles in a form of secondary particles are used as the positive electrode active material.

Secondary particles are formed of aggregated primary particles. Typically, in these particles, primary particles are packed thoroughly in the secondary particles (i.e., the first positive electrode active material particles), and thus the secondary particles may have internal voids due to the gaps between the primary particles. For example, a secondary particle can be schematically represented as in FIG. 2. In FIG. 2, a large number of primary particles are aggregated to form a single particle. A single secondary particle is typically composed of at least 11 or more primary particles. The number of primary particles in a single secondary particle is desirably 30 or more, and more desirably 50 or more. It should be noted that FIG. 2 is merely an example, and the first positive electrode active material particle used in this embodiment is not limited to one shown in the figure.

The first positive electrode active material particles include particles of a lithium composite oxide; and a boron (B)-containing component, lithium hydroxide (LiOH), and lithium carbonate (Li₂CO₃) that are present on the surfaces of the particles of the lithium composite oxide. Therefore, in the first positive electrode active material particles, the B-containing component, LiOH, and Li₂CO₃ adhere to the surfaces of the particles of the lithium composite oxide.

The lithium composite oxide contains 75 mol% or more of Ni relative to metals therein other than Li. Therefore, the lithium composite oxide is a nickel-containing lithium composite oxide (hereinafter also referred to as a "Ni-containing lithium composite oxide"), which is a so-called high-nickel type lithium composite oxide. In the lithium composite oxide, the nickel content relative to the total of metal elements therein other than Li is desirably 80 mol% or more. On the other hand, the content of Ni relative to the total of metal elements other than Li may be 88 mol% or less, or 85 mol% or less.

There is no particular limitation for the crystal structure of the Ni-containing lithium composite oxide, but it is desirably a layered crystal structure. Examples of the Ni-containing lithium composite oxide having a layered crystal structure include lithium-nickel based composite oxides, lithium-nickel-cobalt-manganese based composite oxides, lithium-nickel-cobalt-aluminum based composite oxides, and lithium-iron-nickel-manganese based composite oxides. Among these, lithium-nickel-cobalt-manganese based composite oxides are desired because of their superior properties such as low initial resistance. It should be noted that a known method (e.g., X-ray diffraction) can be used to determine if lithium composite oxide particles have a layered crystal structure.

It should be noted that the term "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies, in the same manner, to lithium-nickel based composite oxides, lithium-nickel-cobalt-aluminum based composite oxides, and lithium-iron-nickel-manganese based composite oxides described above.

As the Ni-containing lithium composite oxide, those having a composition represented by the following formula (I) are specifically desired.

Li₁₊ₐNiₓCo_{y}Mn_{z}M1_{b}O₂ (I)

In the formula (I), a, x, y, z, and b satisfy 0 ≤ a ≤ 0.1, 0.75 ≤ x < 1, 0 ≤ y ≤ 0.20, 0 ≤ z ≤ 0.20, and 0 ≤ b ≤ 0.05, respectively. M1 is at least one element selected from the group consisting of Al, Ti, Zr, Mo, W, Nb, Mg, Ca, Na, Fe, Cr, Zn, and Sn.

In the formula (I), it is desired that M1 is at least one of Al and Ti, and that b satisfies 0.01 ≤ b ≤ 0.05. It is more desired that M1 is at least one of Al and Ti, and that b satisfies 0.02 ≤ b ≤ 0.05. x desirably satisfies 0.80 ≤ x ≤ 0.88. y desirably satisfies 0 ≤ y ≤ 0.15, more desirably 0 < y ≤ 0.15. z desirably satisfies 0 ≤ z ≤ 0.15, more desirably 0 < z ≤ 0.15.

LiOH and Li₂CO₃ present on the surfaces of the Ni-containing lithium composite oxide particles are typically residues or byproducts in manufacture of the Ni-containing lithium composite oxide particles. However, LiOH and Li₂CO₃ present on the surfaces of Ni-containing lithium composite oxide particles are not limited to these.

The B-containing component present on the surfaces of Ni-containing lithium composite oxide particles may be a reaction product of elemental boron or a boron compound with LiOH and Li₂CO₃. The reaction product, which is a B-containing component, may exist in a state of a coating scattered on the surfaces of the Ni-containing lithium composite oxide particles.

With regard to the above B-containing component, LiOH, and Li₂CO₃, the total amount of LiOH and Li₂CO₃ is 0.5 mass % to 1.0 mass %, and the ratio of the total amount of LiOH and Li₂CO₃ to the amount of B is 3.5 to 10 in the first positive electrode active material particles.

As described above, it has been conventionally known that a lithium component such as lithium hydroxide and lithium carbonate adheres to the surfaces of manufactured lithium composite oxide particles as residues, byproducts, and the like, and that this lithium component may react with a non-aqueous electrolyte to generate gas. Therefore, it has been conventionally thought that the amount of a lithium component such as lithium hydroxide and lithium carbonate is desirably reduced as small as possible. For that reason, in the conventional techniques, boron is used to reduce the amounts of LiOH and Li₂CO₃, and the total amount of LiOH and Li₂CO₃ in the positive electrode active material particles is conventionally 0.3 mass% or less.

Therefore, in this embodiment, the total amount of LiOH and Li₂CO₃ in the first positive electrode active material particles is intentionally increased as compared to a conventional amount. Specifically, in this embodiment, the total amount of LiOH and Li₂CO₃ in the first positive electrode active material particles is increased to a range of 0.5 mass% to 1.0 mass%. In addition to this, the ratio of the total amount of LiOH and Li₂CO₃ to the amount of B is adjusted to be between 3.5 and 10 in this embodiment. By doing so, gas generation during storage of a non-aqueous electrolyte secondary battery can be remarkably suppressed uniquely as demonstrated by the results of Examples described below.

Specifically, when the total amount of LiOH and Li₂CO₃ in the first positive electrode active material particles is more than 1.0 mass%, these may react with a non-aqueous electrolyte, resulting in increased gas generation during storage of a non-aqueous electrolyte secondary battery. On the other hand, when the total amount of LiOH and Li₂CO₃ is less than 0.5 mass%, the surface protection of lithium composite oxide particles by the B-containing component may be insufficient, and an unprotected surface area may react with the non-aqueous electrolyte, resulting in increased gas generation during storage. In view of further preventing gas generation during storage, the total amount of LiOH and Li₂CO₃ in the first positive electrode active material particles is desirably 0.7 mass% to 1.0 mass%, and more desirably 0.8 mass% to 1.0 mass%.

Similarly, by ensuring that the ratio of the total amount of LiOH and Li₂CO₃ to the amount of B is within the above ranges, the B-containing component can adequately protect the surfaces of the lithium composite oxide particles, leading to reduced gas generation during storage of a non-aqueous electrolyte secondary battery. In view of further preventing gas generation during storage, the ratio of the total amount of LiOH and Li₂CO₃ to the amount of B in the first positive electrode active material particles is desirably 4.5 to 8, and more desirably 5 to 7.

The amount of LiOH in the first positive electrode active material particles is desirably 0.3 mass% to 0.8 mass%, more desirably 0.4 mass% to 0.7 mass%, and even more desirably 0.6 mass% to 0.7 mass%.

The amount of B in the first positive electrode active material particles is desirably 0.05 mass% to 0.25 mass%, more desirably 0.07 mass% to 0.23 mass%, and even more desirably 0.10 mass% to 0.20 mass%.

It should be noted that the total amount of LiOH and Li₂CO₃ in the first positive electrode active material particles can be determined according to a known method. Specifically, the total amount of LiOH and Li₂CO₃ in the first positive electrode active material particles can be determined by neutralization titration. The amount of B in the first positive electrode active material particles can also be determined according to a known method. Specifically, it can be determined by inductively coupled plasma optical emission spectroscopy (ICP-OES). Therefore, the total amount of LiOH and Li₂CO₃ determined by neutralization titration and the amount of B determined by ICP-OES can be used to calculate the ratio of the total amount of LiOH and Li₂CO₃ to the amount of B in the first positive electrode active material particles.

It should be noted that the total amount of LiOH and Li₂CO₃ in the first positive electrode active material particles, and the ratio of the total amount of LiOH and Li₂CO₃ to the amount of B can be adjusted as follows.

First, lithium composite oxide particles are prepared by a firing method. Specifically, a known lithium source (LiOH, Li₂CO₃, LiCl, LiNO₃, Li₂SO₄, and the like) is mixed with a precursor (i.e., a hydroxide, a carbonate, an oxide, and the like containing metal components other than Li), and then fired according to a known method to obtain lithium composite oxide particles. Lithium components such as residual lithium compounds and by-product lithium compounds adhere to the surfaces of these lithium composite oxide particles. These lithium components include LiOH and Li₂CO₃. When the lithium composite oxide particles are high-nickel based lithium composite oxide particles, the amount of LiOH and Li₂CO₃ may be increased. At this time, the total amount of LiOH and Li₂CO₃ can be adjusted by altering the amount of a lithium source. It should be noted that when the amount of the lithium source is large, the total amount of these tends to increase. Alternatively, a different firing temperature can be used to adjust the total amount of these. It should be noted that a lower firing temperature tends to increase the total amount of these.

Next, the resulting lithium composite oxide particles are washed with water. This water washing process can remove lithium components adhering to the surfaces of lithium composite oxide particles. Therefore, the total amount of LiOH and Li₂CO₃ can be adjusted by varying the extent of water washing. The extent of water washing can be controlled by adjusting water washing conditions such as the amount of washing water and water washing time.

The lithium composite oxide particles after water washing are mixed with a boron component. The boron component may be, for example, elemental boron, or a boron compound such as boric acid, orthoboric acid, boron oxide, and boron nitride. A mixture of the lithium composite oxide particles and the boron component is subjected to heat treatment. A heat treatment temperature may be, for example, 100°C to 500°C, and desirably 200°C to 400°C.

This heat treatment enables the boron component to react with LiOH and Li₂CO₃ present on the surfaces of the lithium composite oxide particles, leading to formation of a boron-containing coating on the surfaces of the lithium composite oxide particles. Therefore, the final total amount of LiOH and Li₂CO₃ and the final amount of B in the positive electrode active material particles can be controlled by altering the mixing amount of the boron component, enabling the ratio of these to be adjusted. Thereby, the first positive electrode active material particles for use in this embodiment can be obtained.

There is no particular limitation for the average particle diameter (D50) of the first positive electrode active material particles. The average particle diameter (D50) of the first positive electrode active material particles is desirably 10 µm to 25 µm, more desirably 13 µm to 19 µm, and even more desirably 14 µm to 18 µm. It should be noted that the term "average particle diameter (D50) of the positive electrode active material particles" as used in this specification refers to the median diameter (D50). This means a particle diameter corresponding to the cumulative frequency of 50 vol% from the side of fine particles with smaller particle diameters in a volume-based particle diameter distribution based on laser diffraction/scattering. Therefore, the average particle diameter (D50) can be determined using a laser diffraction/scattering particle diameter distribution analyzer, and the like.

There is no particular limitation for the average primary particle diameter of the first positive electrode active material particles, but it may be, for example, 0.05 µm to 2.5 µm. Here, the first positive electrode active material particles are in a form of secondary particles, and cracking may occur in the secondary particles due to a pressing process against a positive electrode active material layer 54. Cracking that occurred in the secondary particles may cause gas generation. In view of preventing the cracking of the secondary particles to further reduce gas generation, second positive electrode active material particles in a form of single particles described below, having a smaller secondary particle diameter than the first positive electrode active material particles, are desirably mixed to improve packing efficiency. The average primary particle diameter of the second positive electrode active material particles is desirably 1.2 µm to 3.2 µm, and more desirably 1.8 µm to 2.5 µm.

It should be noted that the term "average primary particle diameter of the positive electrode active material particles" as used in the present specification refers to the average value of longest diameters of randomly selected 50 or more primary particles, as determined from a cross-sectional electron microscope image of the positive electrode active material particles. Therefore, the average primary particle diameter can be determined by, for example, preparing a sample of the positive electrode active material particles for cross-sectional observation by a cross-section polishing process, acquiring an SEM image of the sample using a scanning electron microscope (SEM), determining the longest diameters of randomly selected 50 or more primary particles using an image analysis software for measurement of particle diameter distribution (e.g., "Mac-View" and others), and then calculating the average value thereof.

There is no particular limitation for the BET specific surface area of the first positive electrode active material particles. The BET specific surface area of the first positive electrode active material particles is desirably 0.10 m²/g to 0.70 m²/g, and more desirably 0.3 m²/g to 0.5 m²/g because these can impart excellent output properties to a non-aqueous electrolyte secondary battery. It should be noted that the BET specific surface area of the positive electrode active material particles in the present specification can be measured using a commercially available specific surface area measurement device (e.g., "MacSorb Model-1208" manufactured by Mountec Co., Ltd.) by the nitrogen adsorption method.

The positive electrode active material layer 54 may contain the first positive electrode active material particles alone as a positive electrode active material. That is, the positive electrode active material may consist only of the first positive electrode active material particles. On the other hand, the positive electrode active material layer 54 may further contain a positive electrode active material other than the first positive electrode active material particles within a range where it does not significantly impair the effects of the present disclosure.

In a desired embodiment, the positive electrode active material layer 54 contains the second positive electrode active material particles in a form of single particles in addition to the first positive electrode active material particles in a form of secondary particles. When the positive electrode active material contains the second positive electrode active material particles in a form of single particles, the cycle characteristics of a non-aqueous electrolyte secondary battery (in particular, resistance to capacity degradation due to repeated charging and discharging cycles) can be enhanced.

As used in the present specification, the term "single particle" refers to a particle formed by the growth of a single crystal nucleus, and thus refers to a particle of a single crystal without having crystal grain boundaries. For example, analysis on electron diffraction images obtained by transmission electron microscopy (TEM) can be used to determine if a particle is of a single crystal.

Single particles intrinsically tend not to aggregate. Single particles alone may form the second positive electrode active material particles (in particular lithium composite oxide particles), but single particles may also aggregate to form the second positive electrode active material particles. However, when single particles aggregate to form the second positive electrode active material particles, the number of aggregated single particles is 2 or more and 10 or less. Therefore, a single second positive electrode active material particle is composed of 1 or more and 10 or less single particles. The second positive electrode active material particle may be composed of 1 or more and 5 or less single particles, or may be composed of 1 or more and 3 or less single particles, or may be composed of one single particle. It should be noted that the number of single particles in a single second positive electrode active material particle can be determined by observation using scanning electron microscopy (SEM) at a magnification of 10,000 to 30,000 times.

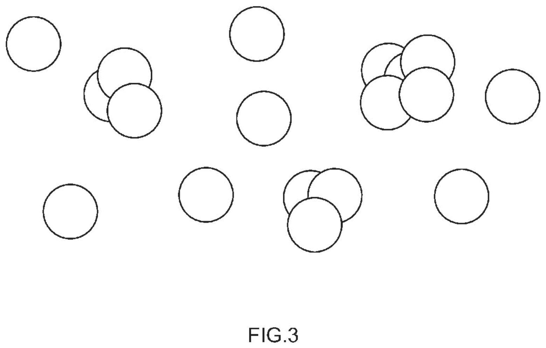

Therefore, a single particle can, for example, be schematically shown as in FIG. 3. FIG. 3 shows isolated particles and particles formed by the aggregation of multiple particles. It should be noted that FIG. 3 is merely an example, and the second positive electrode active material particles used in this embodiment are not limited to those shown in the figure.

In this way, single particles differ from polycrystalline particles composed of multiple crystalline grains or secondary particles formed by the aggregation of many fine particles (primary particles). The positive electrode active material particles in a form of single particles can be produced according to a known method for obtaining single-crystal particles.

There is no particular limitation for the average particle diameter (D50) of the second positive electrode active material particles. The average particle diameter (D50) of the second positive electrode active material particles is desirably smaller than the average particle diameter (D50) of the first positive electrode active material particles. By this, the packing efficiency of the positive electrode active material particles in the positive electrode active material layer 54 can be improved, thereby further increasing a volumetric energy density of a non-aqueous electrolyte secondary battery. The average particle diameter (D50) of the second positive electrode active material particles is desirably 2 µm to 6 µm, more desirably 2 µm to 5 µm, and even more desirably 2 µm to 4 µm.

There is no particular limitation for the BET specific surface area of the second positive electrode active material particles. The BET specific surface area of the second positive electrode active material particles is desirably 0.30 m²/g to 0.7 m²/g, and more desirably 0.35 m²/g to 0.50 m²/g because these can impart excellent output properties to a non-aqueous electrolyte secondary battery.

The second positive electrode active material particles in a form of single particles are typically particles of a lithium composite oxide. The lithium composite oxide particles are desirably a Ni-containing lithium composite oxide having a layered crystal structure. Examples include lithium-nickel based composite oxides, lithium-nickel-cobalt-manganese based composite oxides, lithium-nickel-cobalt-aluminum based composite oxides, and lithium-iron-nickel-manganese based composite oxides. Among these, lithium-nickel-cobalt-manganese based composite oxides are desired because of their superior properties such as low initial resistance.

For the second positive electrode active material particles, the Ni-containing lithium composite oxide having a layered crystal structure is also desirably a high-nickel based lithium composite oxide in view of obtaining a high volumetric energy density in a non-aqueous electrolyte secondary battery. Therefore, the Ni-containing lithium composite oxide desirably contains 75 mol% or more of Ni relative to metals therein other than Li, and more desirably contains 80 mol% or more of Ni.

For the second positive electrode active material particles, it is also desired that the Ni-containing lithium composite oxides is specifically those having a composition represented by the above formula (I). The composition of the first positive electrode active material particles in a form of secondary particles and the composition of the second positive electrode active material particles in a form of single particles may be the same or different. Both the first positive electrode active material particles and the second positive electrode active material particles are desirably particles of a lithium-nickel-cobalt-manganese based composite oxide because of their excellent properties such as low initial resistance.

There is no particular limitation for the total amount of LiOH and Li₂CO₃ in the second positive electrode active material particles, but it is desirably 0.5 mass% or less (in particular 0.2 mass% to 0.5 mass%) in view of preventing gas generation during storage caused by the second positive electrode active material particles.

There is no particular limitation for the content ratio of the first positive electrode active material particles and the second positive electrode active material particles. In view of achieving a high level of the effects obtained from these positive electrode active material particles, the mass ratio thereof (the first positive electrode active material particles: the second positive electrode active material particles) is desirably 30:70 to 70:30, and more desirably 50:50 to 70:30.

The positive electrode active material layer 54 may include a component other than the positive electrode active material, for example, trilithium phosphate, a conductive material, a binder, and the like. For example, carbon black such as acetylene black (AB) and other carbon materials (e.g., graphite and the like) can be suitably used as the conductive material. For example, polyvinylidene fluoride (PVDF) may be used as the binder.

There is no particular limitation for the content of the positive electrode active material in the positive electrode active material layer 54 (i.e., the content of the positive electrode active material relative to the total mass of the positive electrode active material layer 54), but it is desirably 70 mass% or more, more desirably 80 mass% or more and 99 mass% or less, and even more desirably 85 mass% or more and 98 mass% or less. There is no particular limitation for the content of the conductive material in the positive electrode active material layer 54, but it is desirably 0.5 mass% or more and 15 mass% or less, and more desirably 1 mass% or more and 10 mass% or less. There is no particular limitation for the content of the binder in the positive electrode active material layer 54, but it is desirably 0.5 mass% or more and 15 mass% or less, and more desirably 0.8 mass% or more and 10 mass% or less.

There is no particular limitation for the thickness of the positive electrode active material layer 54, but it is, for example, 10 µm or more and 300 µm or less, and desirably 20 µm or more and 200 µm or less.

There is no particular limitation for the density of the positive electrode active material layer 54, but in view of obtaining a particularly high volumetric energy density, it is desirably 3.00 g/cm³ to 4.00 g/cm³, more desirably 3.20 g/cm³ to 4.00 g/cm³, even more desirably 3.40 g/cm³ to 4.00 g/cm³, and in particular desirably 3.50 g/cm³ to 4.00 g/cm³. The higher is the density of the positive electrode active material layer 54, the greater is the pressure required in the pressing process. This may tend to result in cracking of the first lithium composite oxide particles. Therefore, when the density of the positive electrode active material layer 54 is higher, the effect of preventing gas generation during storage can be more enhanced.

In a positive electrode active material layer non-formed portion 52a of a positive electrode sheet 50, an insulating protective layer (not shown) including insulating particles (e.g., ceramic particles) may be provided at a position adjacent to the positive electrode active material layer 54. This protective layer can prevent short circuits between the positive electrode active material layer non-formed portion 52a and the negative electrode active material layer 64.

The positive electrode 50 according to this embodiment can be produced by preparing a paste for forming a positive electrode active material layer, which contains a positive electrode active material, a solvent (a dispersion medium), and optionally a binder, a conductive material, and the like; applying the paste onto the positive electrode current collector 52; performing a drying process; and then performing a pressing process.

The positive electrode according to this embodiment can impart a high ability of preventing gas generation during storage (in particular during storage at high temperatures) to a non-aqueous electrolyte secondary battery. Further, the use of a high-nickel based lithium composite oxide can impart a high volumetric energy density to a non-aqueous electrolyte secondary battery.

In the above, the embodiments are described in which the positive electrode is a positive electrode for a lithium-ion secondary battery. The positive electrode according to the present disclosure is typically a positive electrode for a non-aqueous electrolyte secondary battery, and desirably a positive electrode for a non-aqueous lithium-ion secondary battery. It should be noted that the positive electrode according to this embodiment can also be used as a positive electrode of an all-solid-state secondary battery.

Accordingly in view of another perspective, the non-aqueous electrolyte secondary battery according to the present disclosure includes a positive electrode, a negative electrode, and a non-aqueous electrolyte. This positive electrode is the presently disclosed positive electrode as described above.

Hereinafter, the non-aqueous electrolyte secondary battery according to the present disclosure will be described in detail with reference to the embodiments where a flattened rectangular lithium-ion secondary battery has a flattened wound electrode body and a flattened battery case as an example. However, the non-aqueous electrolyte secondary battery according to the present disclosure is not limited to the embodiments described below.

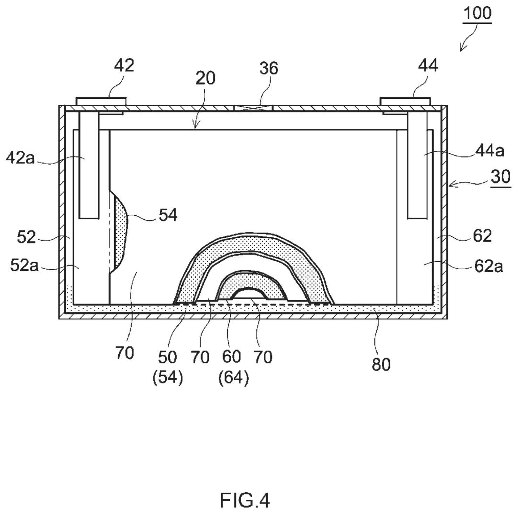

A lithium-ion secondary battery 100 shown in FIG. 4 is a sealed battery in which a flattened wound electrode body 20 and a non-aqueous electrolyte 80 are housed in a flattened rectangular battery case (i.e., an outer container) 30. The battery case 30 is provided with a positive electrode terminal 42 and a negative electrode terminal 44 for external connection, and a thin-walled safety valve 36 designed to release the internal pressure of the battery case 30 when the internal pressure increases a predetermined level or above. The positive electrode terminal 42 and the negative electrode terminal 44 are electrically connected to a positive electrode current collecting plate 42a and a negative electrode current collecting plate 44a, respectively. The material of the battery case 30 may be, for example, a lightweight metal material having good thermal conductivity, for example, aluminum. It should be noted that a current interrupting device (CID) may be provided between the positive electrode terminal 42 and the positive electrode current collecting plate 42a, or between the negative electrode terminal 44 and the negative electrode current collecting plate 44a.

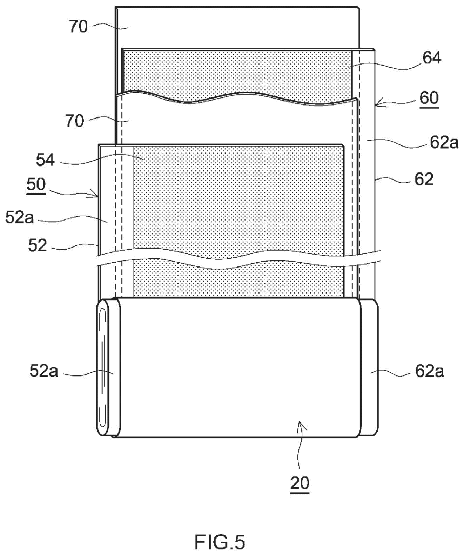

As shown in FIGs. 4 and 5, the wound electrode body 20 includes a positive electrode sheet 50 and a negative electrode sheet 60 stacked together via two elongated separator sheets 70 and wound in the longitudinal direction. The positive electrode sheet 50 has a configuration in which a positive electrode active material layer 54 is formed along the longitudinal direction on one or both surfaces (in this case, both surfaces) of an elongated positive electrode current collector 52. The negative electrode sheet 60 has a configuration in which a negative electrode active material layer 64 is formed along the longitudinal direction on one or both surfaces (in this case, both surfaces) of the elongated negative electrode current collector 62.

A positive electrode active material layer non-formed portion 52a (i.e., a portion where the positive electrode active material layer 54 is not formed and the positive electrode current collector 52 is exposed) and a negative electrode active material layer non-formed portion 62a (i.e., a portion where the negative electrode active material layer 64 is not formed and the negative electrode current collector 62 is exposed) are formed so as to protrude outwardly from both ends in the winding axis direction of the wound electrode body 20 (i.e., a sheet width direction perpendicular to the longitudinal direction). The positive electrode active material layer non-formed portion 52a and the negative electrode active material layer non-formed portion 62a each function as a current collecting portion. The positive electrode active material layer non-formed portion 52a and the negative electrode active material layer non-formed portion 62a are joined to the positive electrode current collecting plate 42a and the negative electrode current collecting plate 44a, respectively. It should be noted that the shapes of the positive electrode active material layer non-formed portion 52a and the negative electrode active material layer non-formed portion 62a are not limited to those examples shown in the figures. The positive electrode active material layer non-formed portion 52a and the negative electrode active material layer non-formed portion 62a may be formed as current collector tabs processed into predetermined shapes.

The positive electrode 50 described in the above embodiments is used for the positive electrode sheet 50. It should be noted that in this configurational example, the positive electrode sheet 50 has a positive electrode active material layer 54 formed on both surfaces of the positive electrode current collector 52.

A known negative electrode current collector used for lithium-ion secondary batteries may be used as the negative electrode current collector 62 constituting the negative electrode sheet 60. Examples include sheets or foils made of metals with good electrical conductivity (e.g., copper, nickel, titanium, stainless steel, and the like). A copper foil is desired as the negative electrode current collector 62.

There is no particular limitation for the dimensions of the negative electrode current collector 62, and they may be appropriately selected according to the battery designs. When a copper foil is used as the negative electrode current collector 62, the thickness thereof is, for example, but not particularly limited to, 5 µm or more and 35 µm or less, and desirably 7 µm or more and 20 µm or less.

The negative electrode active material layer 64 contains a negative electrode active material. For the negative electrode active material, carbon materials, for example, graphite, hard carbon, soft carbon, and the like may be used. Graphite may be natural graphite or artificial graphite, and may be amorphous carbon-coated graphite in which graphite is coated with an amorphous carbon material.

There is no particular limitation for the average particle diameter (D50) of the negative electrode active material, but it is, for example, 0.1 µm or more and 50 µm or less, desirably 1 µm or more and 25 µm or less, and more desirably 5 µm or more and 20 µm or less. It should be noted that the average particle diameter (D50) of the negative electrode active material can be determined, for example, by the laser diffraction scattering method.

The negative electrode active material layer 64 may include a component other than the active material, for example, a binder, a thickener, and the like. For example, styrene butadiene rubber (SBR), polyvinylidene fluoride (PVDF), and the like may be used as the binder. Carboxymethyl cellulose (CMC) and the like may be used as the thickener.

The content of the negative electrode active material in the negative electrode active material layer 64 is desirably 90 mass% or more, and more desirably 95 mass% or more and 99 mass% or less. The content of the binder in the negative electrode active material layer 64 is desirably 0.1 mass% or more and 8 mass% or less, and more desirably 0.5 mass% or more and 3 mass% or less. The content of the thickener in the negative electrode active material layer 64 is desirably 0.3 mass% or more and 3 mass% or less, and more desirably 0.5 mass% or more and 2 mass% or less.

There is no particular limitation for the thickness of the negative electrode active material layer 64, but it is, for example, 10 µm or more and 300 µm or less, and desirably 20 µm or more and 200 µm or less.

Examples of a separator 70 include porous sheets (films) composed of resins such as polyethylene (PE), polypropylene (PP), polyester, cellulose, polyamide, and the like. These porous sheets may be of single-layer structures or laminated structures comprising two or more layers (e.g., a three-layer structure in which PP layers are laminated on both surfaces of a PE layer). A heat-resistant layer (HRL) may be provided on a surface of the separator 70.

The non-aqueous electrolyte 80 typically contains a non-aqueous solvent and a supporting salt (an electrolyte salt). As the non-aqueous solvent, various organic solvents such as carbonates, ethers, esters, nitriles, sulfones, and lactones used for electrolytes of common lithium-ion secondary batteries can be used without any particular limitation. Specific examples include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluorodimethyl carbonate (TFDMC), and the like. These non-aqueous solvents may be used either alone or in combinations of two or more as appropriate.

As the supporting salt, lithium salts, for example, LiPF₆, LiBF₄, lithium bis(fluorosulfonyl)imide (LiFSI) (desirably LiPF₆), and the like can be suitably used. The concentration of the supporting salt is desirably 0.7 mol/L or more and 1.3 mol/L or less.

It should be noted that the non-aqueous electrolyte 80 may include a component other than the aforementioned components, for example, various additives such as film forming agents, for example, vinylidene carbonate (VC), oxalate complexes, and the like; gas-generating agents, for example, biphenyl (BP), cyclohexylbenzene (CHB), and the like; and thickeners as long as the effects of the present disclosure are not significantly impaired.

The lithium-ion secondary battery 100 configured as described above has a high ability of preventing gas generation during storage (in particular when stored at high temperatures). Further, the lithium-ion secondary battery 100 has a high volumetric energy density because a high-nickel type lithium composite oxide is used. The lithium-ion secondary battery 100 can be used for various applications. Specific applications include portable power sources for personal computers, mobile electronic devices, mobile terminals, and the like; vehicle drive power sources for electric vehicles (BEVs), hybrid vehicles (HEVs), plug-in hybrid vehicles (PHEVs), and the like; and electrical energy storage batteries for small-scale electrical power storage devices. Among these, vehicle drive power sources are particularly desired. The lithium ion secondary battery 100 can also be used in a form of a battery module in which typically a plurality of batteries is connected in series and/or in parallel.

It should be noted that a rectangular lithium-ion secondary battery 100 having a flattened wound electrode body 20 is described as an example. However, the non-aqueous electrolyte secondary battery according to the present disclosure may also be configured as a lithium-ion secondary battery having a stacked-type electrode body (i.e., an electrode body in which a plurality of positive electrodes and a plurality of negative electrodes are alternately stacked). The stacked-type electrode body may include multiple separators so that one separator interposed each between a positive electrode and a negative electrode, or may include a single separator folded back while a positive electrode and a negative electrode are alternately stacked.

The non-aqueous electrolyte secondary battery according to the present disclosure may also be configured as a coin-type lithium-ion secondary battery, a button-type lithium-ion secondary battery, a cylindrical lithium-ion secondary battery, or a laminate case-type lithium-ion secondary battery. The non-aqueous electrolyte secondary battery according to the present disclosure may also be configured according to a known method as a non-aqueous electrolyte secondary battery other than a lithium-ion secondary battery.

Alternatively, the positive electrode according to the present disclosure can be used to construct an all-solid-state secondary battery (in particular an all-solid-state lithium-ion secondary battery) according to a known method by using a solid electrolyte in place of the non-aqueous electrolyte 80.

Examples of the present disclosure will be described below, but the present disclosure is not intended to be limited to those Examples.

### <Examples 1 to 5 and Comparative Examples 1 to 5>

Positive electrode active material particles (1) were prepared as in the manner described in Patent Literature 2 (WO2024/095978). Specifically, a lithium compound was mixed with a precursor containing Ni, Co, Mn, and Al, and then the resulting mixture was fired to obtain lithium composite oxide particles with a composition of LiNi_{0.8}Co_{0.09}Mn_{0.09}Al_{0.02}O₂. The above lithium composite oxide particles were in a form of secondary particles. After washing with water, the above lithium composite oxide particles were mixed with boric acid (B(OH)₃), and the resulting mixture was thermally treated to allow boric acid to react with LiOH and Li₂CO₃ present on the surfaces of the lithium composite oxide particles, thereby forming a boron-containing coating on the surfaces of the lithium composite oxide particles. In this manner, obtained were the positive electrode active material particles (1) having a boron (B)-containing component, LiOH, and Li₂CO₃ on the surfaces of lithium composite oxide particles. At this time, the amounts of LiOH and Li₂CO₃ and the amount of boron (B) on the surfaces of the lithium composite oxide particles were altered by varying the conditions of water washing and the usage amount of boric acid. However, in Comparative Example 1, lithium composite oxide particles without including the B-containing component were prepared without using boric acid.

The total amount of LiOH and Li₂CO₃ and the amount of B in the positive electrode active material particles (1) were determined by a method described below to calculate the ratio of the total amount of LiOH and Li₂CO₃ to the amount of B. Results are shown in Table 1. The average particle diameter (D50) of the first positive electrode active material particles was 17 µm as measured using a commercially available laser diffraction/scattering particle diameter distribution analyzer.

As the positive electrode active material particles (2), prepared was LiNi_{0.82}Co_{0.09}Mn_{0.09}O₂ in a form of single particles. The average particle diameter (D50) of the positive electrode active material particles (2) was 4 µm as measured using a commercially available laser diffraction/scattering particle diameter distribution analyzer. The positive electrode active material particles (1) and the positive electrode active material particles (2) were mixed at a mass ratio of 60:40 to prepare a positive electrode active material.

The above positive electrode active material, acetylene black (AB) as a conductive material, and polyvinylidene fluoride (PVDF) as a binder are mixed at a mass ratio of the positive electrode active material: AB:PVDF = 97.5:1.5:1.0. An appropriate amount of N-methyl-2-pyrrolidone (NMP) was then added to the resulting mixture to prepare a slurry for forming a positive electrode active material layer.

The slurry for forming a positive electrode active material layer was applied to both sides of a positive electrode current collector made of an aluminum foil, and then dried to form a positive electrode active material layer. The positive electrode active material layer was roll-pressed using a rolling roller so as to give a density of 3.50 g/cm³, and then cut into predetermined dimensions to produce a positive electrode sheet.

Graphite (C) as a negative electrode active material, styrene butadiene rubber (SBR) as a binder, and carboxymethyl cellulose (CMC) as a thickener were mixed in ion-exchanged water at a mass ratio of C:SBR:CMC = 98:1:1 to prepare a slurry for forming a negative electrode active material layer. This slurry for forming a negative electrode active material layer was applied to a copper foil, and then dried to form a negative electrode active material layer. The negative electrode active material layer was roll-pressed using a rolling roller so as to give a specified density, and then cut into predetermined dimensions to produce a negative electrode sheet.

A porous polyolefin sheet was provided as a separator. The positive electrode sheet and the negative electrode sheet were stacked with a separator interposed between them to form a stacked-type electrode body.

The electrode terminals were attached to the stacked-type electrode body, which was then inserted into a battery case composed of an aluminum laminate sheet, and the battery case was filled with a non-aqueous electrolyte. It should be noted that a non-aqueous electrolyte was used in which LiPF₆ as a supporting salt was dissolved at a concentration of 1 mol/L in a mixed solvent including ethylene carbonate (EC) and ethyl methyl carbonate (EMC) at a volume ratio of EC:EMC = 30:70, and vinylene carbonate was added to give a concentration of 0.3 mass%. Subsequently, the battery case was sealed to obtain a lithium-ion secondary battery for evaluation in each of Examples and Comparative Examples.

### <Measurement of the amount of LiOH and Li₂CO₃ in the positive electrode active material particles (1)>

The amount of LiOH and Li₂CO₃ in the positive electrode active material particles (1) was measured by neutralization titration. Specifically, 5 g of the positive electrode active material particles (1) and 100 g of pure water were added to a container to prepare a slurry. The slurry was stirred for 5 minutes, and then filtered to obtain a filtrate. The filtrate in an amount of 60 g was weighed out, and to this, 0.1 mol/L hydrochloric acid was added dropwise in a continuous manner. Hydrochloric acid was added dropwise using an automatic titrator until the pH reached 4.0. At this point, the titration volume of hydrochloric acid A [mL] when the pH reached 8.3 ± 0.1 and the titration volume of hydrochloric acid B [mL] when the pH reached 4.5 ± 0.1 were determined in the filtrate into which hydrochloric acid was added dropwise.

Next, the following (Equation a) and (Equation b) were used to calculate the mass percentage W1 of LiOH and the mass percentage W2 of Li₂CO₃. It should be noted that in (the Equation a) and (Equation b), the following atomic weights were used: H: 1.000, Li: 6.941, C: 12, and O: 16. Therefore, the molecular weights of LiOH and Li₂CO₃ were defined to be 23.941 and 73.882, respectively. $W 1 \left(mass%\right) = \left\{0.1\times \left(2A-B\right)/1000\right\} \times \left\{23.941/\left(20\times 60/100\right)\right\} \times 100$ (a) $W 2 \left(mass%\right) = \left\{0.1\times \left(B-A\right)/1000\right\} \times \left\{73.882/\left(20\times 60/100\right)\right\} \times 100$ (b)

Then, the total amount (mass%) of LiOH and Li₂CO₃ in the positive electrode active material particles (1) was determined from the results of W1 and W2 calculated as described above.

### <Measurement of the amount of boron (B) in the positive electrode active material particles (1)>

The positive electrode active material particles (1) in an amount of 0.1 g was weighed out, and placed in a vial. To this, 1 mL of concentrated hydrochloric acid and 0.5 mL of hydrogen peroxide were added, and thereafter, the positive electrode active material particles (1) were dissolved therein at room temperature for 3 hours. Bubbles and heat were generated during the dissolution process. To the resulting solution, added was 0.1 mL of an internal standard solution (Sc 1000 µg/mL). Then ICP-OES analysis was performed thereon to determine the amount of boron (B) (mass%) in the positive electrode active material particles (1).

### <Evaluation of gas generation during storage>

Each of the lithium-ion secondary batteries for evaluation was subjected to an activation process, and then charged to 4.2 V. A volume at this point (i.e., a volume before storage) was determined by the Archimedes method. Then, each of the lithium-ion secondary batteries for evaluation was stored in a constant-temperature chamber at 70°C for 30 days. A volume at this point (i.e., a volume after storage) was determined by the Archimedes method. The amount of gas generation was calculated based on the difference in volume before and after storage. Further, the relative ratio of the amounts of gas generation for the Examples other than Example 1 and for Comparative examples were calculated when the amount of gas generation in Example 1 was considered as 100. Results are shown in Table 1.

### [Table 1]

**Table 1**

| | Positive electrode active material particle (1) | | | | | Relative Ratio of gas generation |
|---|---|---|---|---|---|---|
| | Amount of LiOH (mass%) | Amount of Li₂CO₃ (mass%) | LiOH₊Li₂CO₃ (mass%) | Amount of B (mass%) | (LiOH₊Li₂CO₃) /B | |
| Comparative Example 1 | 0.08 | 0.04 | 0.12 | 0 | | 400 |
| Comparative Example 2 | 0.08 | 0.04 | 0.12 | 0.1 | 1.3 | 250 |
| Comparative Example 3 | 0.2 | 0.1 | 0.3 | 0.1 | 3 | 150 |
| Comparative Example 4 | 0.2 | 0.1 | 0.3 | 0.2 | 1.5 | 200 |
| Comparative Example 5 | 0.4 | 0.1 | 0.5 | 0.2 | 2.5 | 150 |
| Example 1 | 0.4 | 0.1 | 0.5 | 0.1 | 5 | 100 |
| Example 2 | 0.5 | 0.2 | 0.7 | 0.1 | 7 | 100 |
| Example 3 | 0.7 | 0.3 | 1.0 | 0.2 | 5 | 90 |
| Example 4 | 0.5 | 0.2 | 0.7 | 0.2 | 3.5 | 130 |
| Example 5 | 0.7 | 0.3 | 1.0 | 0.1 | 10 | 130 |

Results in Table 1 indicate that when the total amount of LiOH and Li₂CO₃ in the positive electrode active material particles (1) is 0.5 to 1.0 mass%, and the ratio of the total amount of LiOH and Li₂CO₃ to the amount of B is 3.5 to 10, the gas generation after storage is reduced.

Therefore, it can be understood that the positive electrode according to the present disclosure can prevent the gas generation during storage of a non-aqueous electrolyte secondary battery having a lithium composite oxide with a high nickel content ratio.

Specific examples of the present disclosure are described in the above, but these are merely illustrative and do not limit the scope of the claims. The technology described in the claims encompasses various modifications and alterations of the specific examples illustrated in the foregoing descriptions.

That is, the positive electrode and the non-aqueous electrolyte secondary battery disclosed herein include the following [1] to [8].
[1] A positive electrode including:
   a positive electrode current collector and
   a positive electrode active material layer supported by the positive electrode current collector, wherein
   the positive electrode active material layer includes first positive electrode active material particles in a form of secondary particles, and
   the first positive electrode active material particles include particles of a lithium composite oxide; and a B-containing component, LiOH, and Li₂CO₃ that are present on surfaces of the particles of the lithium composite oxide, and
   the lithium composite oxide contains 75 mol% or more of Ni relative to metals therein other than Li, and
   the total amount of LiOH and Li₂CO₃ in the first positive electrode active material particles is 0.5 mass% to 1.0 mass%, and the ratio of the total amount of LiOH and Li₂CO₃ to the amount of B is 3.5 to 10.
[2] The positive electrode according to [1], wherein the ratio of the total amount of LiOH and Li₂CO₃ to the amount of B in the first positive electrode active material particles is 4.5 to 8.
[3] The positive electrode according to [1], wherein the ratio of the total amount of LiOH and Li₂CO₃ to the amount of B in the first positive electrode active material particles is 5 to 7.
[4] The positive electrode according to any one of [1] to [3], wherein the lithium composite oxide has a composition represented by the following formula (I):

   Li₁₊ₐNiₓCo_{y}Mn_{z}M1_{b}O₂ (I)

   wherein in the formula (I), a, x, y, z, and b satisfy 0 ≤ a ≤ 0.1, 0.75 ≤ x < 1, 0 ≤ y ≤ 0.20, 0 ≤ z ≤ 0.20, and 0 ≤ b ≤ 0.05, respectively; and M1 is at least one element selected from the group consisting of Al, Ti, Zr, Mo, W, Nb, Mg, Ca, Na, Fe, Cr, Zn, and Sn.
[5] The positive electrode according to [4], wherein in the formula (I), M1 is at least one of Al and Ti, and b satisfies 0.02 ≤ b ≤ 0.05.
[6] The positive electrode according to any one of [1] to [5], wherein the positive electrode active material layer further contains second positive electrode active material particles in a form of single particles.
[7] The positive electrode according to [6], wherein the mass ratio between the first positive electrode active material particles and the second positive electrode active material particles is 30:70 to 70:30.
[8] A non-aqueous electrolyte secondary battery, comprising:
   the positive electrode according to any one of [1] to [7],
   a negative electrode, and
   a non-aqueous electrolyte.

## Claims

1. A positive electrode (50) comprising:
a positive electrode current collector (52) and
a positive electrode active material layer (54) supported by the positive electrode current collector (52), wherein
the positive electrode active material layer (54) includes first positive electrode active material particles in a form of secondary particles, and
the first positive electrode active material particles include particles of a lithium composite oxide; and a B-containing component, LiOH, and Li2CO3 that are present on surfaces of the particles of the lithium composite oxide, and
the lithium composite oxide contains 75 mol% or more of Ni relative to metals therein other than Li, and
the total amount of LiOH and Li2CO3 in the first positive electrode active material particles is 0.5 mass% to 1.0 mass%, and the ratio of the total amount of LiOH and Li2CO3 to the amount of B is 3.5 to 10.

2. The positive electrode (50) according to claim 1, wherein the ratio of the total amount of LiOH and Li2CO3 to the amount of B in the first positive electrode active material particles is 4.5 to 8.

3. The positive electrode (50) according to claim 1, wherein the ratio of the total amount of LiOH and Li2CO3 to the amount of B in the first positive electrode active material particles is 5 to 7.

4. The positive electrode (50) according to claim 1, wherein the lithium composite oxide has a composition represented by the following formula (I):
Lil+aNixCoyMnzM1bO2 (I)
wherein in the formula (I), a, x, y, z, and b satisfy 0 ≤ a ≤ 0.1, 0.75 ≤ x < 1, 0 ≤ y ≤ 0.20, 0 ≤ z ≤ 0.20, and 0 ≤ b ≤ 0.05, respectively; and M1 is at least one element selected from the group consisting of Al, Ti, Zr, Mo, W, Nb, Mg, Ca, Na, Fe, Cr, Zn, and Sn.

5. The positive electrode (50) according to claim 4, wherein in the formula (I), M1 is at least one of Al and Ti, and b satisfies 0.02 ≤ b ≤ 0.05.

6. The positive electrode (50) according to claim 1, wherein the positive electrode active material layer (54) further contains second positive electrode active material particles in a form of single particles.

7. The positive electrode (50) according to claim 6, wherein the mass ratio between the first positive electrode active material particles and the second positive electrode active material particles is 30:70 to 70:30.

8. A non-aqueous electrolyte secondary battery (100), comprising:
the positive electrode (50) according to any one of claims 1 to 7,
a negative electrode (60), and
a non-aqueous electrolyte (80).
